# EUROPÄISCHE PATENTSCHRIFT

(11) **EP 1 927 606 B1**
(45) Veröffentlichungstag und Bekanntmachung des Hinweises auf die Patenterteilung: **12.08.2009**
(21) Anmeldenummer: 07022349.0
(22) Anmeldetag: 17.11.2007
(51) Int. Cl.: C08G 18/08, C08G 18/38

(54) **Verfahren zur Herstellung von selbstverlöschenden, thermoplastischen Polyurethanen**
Method for manufacturing self-extinguishing thermoplastic polyurethanes
Procédé de fabrication de polyuréthanes thermoplastiques auto extinguibles

(30) Priorität: 30.11.2006 DE 102006056521
(43) Veröffentlichungstag der Anmeldung: 04.06.2008
(73) Patentinhaber: Bayer MaterialScience AG, 51368 Leverkusen (DE)
(72) Erfinder: Peerlings, Henricus, Dr., 42699 Solingen (DE); Bräuer, Wolfgang, Dr., 51375 Leverkusen (DE); Broich, Markus, 41836 Hückelhoven (DE)

(56) Entgegenhaltungen:
- EP-A- 1 391 472
- EP-A- 1 394 189

## Beschreibung

Die vorliegende Erfindung betrifft ein Verfahren zur Herstellung von selbstverlöschenden, thermoplastischen Polyurethanen, die gegebenenfalls übliche Zusatzstoffe und/oder Hilfsmittel enthalten.

Thermoplastische Polyurethane (TPU) sind wegen ihrer guten Elastomereigenschaften und thermoplastischen Verarbeitbarkeit von großer technischer Bedeutung. Eine Übersicht über die Herstellung, Eigenschaften und Anwendungen von TPU ist z.B. im Kunststoff Handbuch [G. Becker, D. Braun], Band 7 "Polyurethane", München, Wien, Carl Hanser Verlag, 1983 gegeben.

TPU werden zumeist aus linearen Polyolen (Makrodiolen), wie Polyester-, Polyether- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Der Aufbau der thermoplastisch verarbeitbaren Polyurethanelastomere kann entweder schrittweise (Prepolymerdosierverfahren) oder durch die gleichzeitige Reaktion aller Komponenten in einer Stufe (one-shot-Dosierverfahren) erfolgen.

Ein Nachteil der TPU ist ihre leichte Entflammbarkeit. Zur Verminderung dieses Nachteils werden den TPU Flammschutzmittel, wie beispielsweise halogenhaltige Verbindungen, einverleibt. Der Zusatz dieser Produkte wirkt sich jedoch vielfach negativ auf die mechanischen Eigenschaften der erhaltenen TPU-Formmassen aus. Auch sind aufgrund der korrosiven Wirkung der halogenhaltigen Substanzen halogenfreie selbstverlöschende TPU-Formmassen erstrebenswert.

Vor allem wenn hohe Anforderungen an mechanische Eigenschaften gestellt werden, ist es erstrebenswert einbaufähige Flammschutzmittel einzusetzen. Derartige Mittel werden unter anderem in US-B 7 160 974 und DE-B 102 38 112 beschrieben. Hierbei wird in einem mehrstufigen Verfahren ein Flammschutzmittel auf Basis einbaufähiger Phosphonate oder Phospinoxide eingesetzt. Es werden TPU mit mäßigen Eigenschaften erhalten.

Die Aufgabe der vorliegenden Erfindung bestand darin, selbstverlöschende, thermoplastische Polyurethane zur Verfügung zu stellen, die keine halogenhaltigen Flammschutzmittel enthalten, nach Entzündung mit einer heißen Flamme in wenigen Sekunden nicht brennend verlöschen, nicht bzw. nicht brennend abtropfen und dabei gleichzeitig sehr gute mechanische Eigenschaften und Verarbeitungseigenschaften (Extrusionsqualität) aufweisen.

Diese Aufgabe konnte dadurch gelöst werden, dass zur Flammfestausrüstung des TPU organische einbaufähige Phosphinoxide im One-shot-Verfahren eingesetzt werden.

Gegenstand der Erfindung ist ein Verfahren zur Herstellung von selbstverlöschenden, thermoplastischen Polyurethanen, gegebenenfalls in Gegenwart von Katalysatoren E), wobei im One-shot-Verfahren
- A): wenigstens ein organisches Diisocyanat mit
- B): wenigstens einem Polyol mit im Mittel mindestens 1,8 und höchstens 3,0 zerewitinoffaktiven Wasserstoffatomen und einem zahlenmittleren Molekulargewicht M̅ₙ von 450 bis 10000,
- C): wenigstens einem niedermolekularen Polyol oder Polyamin mit im Mittel mindestens 1,8 und höchstens 3,0 zerewitinoffaktiven Wasserstoffatomen und einem zahlenmittleren Molekulargewicht M̅ₙ von 60 bis 400 als Kettenverlängerer und
- D): mindestens einer organischen phosphorhaltigen Verbindung auf Basis Phosphinoxid mit im Mittel mindestens 1,5 und höchstens 3,0 zerewitinoffaktiven Wasserstoffatomen und einem zahlenmittleren Molekulargewicht M̅ₙ von 60 bis 10000 in einer Menge von 0,1 bis 20 Gew.-%, bezogen auf die Gesamtmenge an TPU, mit folgender Strukturformel (I) 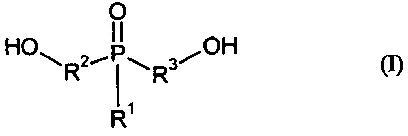
mit
- R¹ =: H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,
- R², R³ =: verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen, wobei R² und R³ gleich oder verschieden sein können,
umgesetzt wird, gegebenenfalls unter Verwendung von
- F): weiteren Flammschutzmitteln, welche keine zerewitinoffaktiven Wasserstoffatome enthalten, in einer Menge von 0 bis 70 Gew.-%, bezogen auf die Gesamtmenge an TPU, und
- G): 0 bis 20 Gew.-%, bezogen auf die Gesamtmenge an TPU, weiteren Hilfs- und Zusatzstoffen,
wobei die Kennzahl (gebildet aus dem mit 100 multiplizierten Äquivalenzverhältnis der Isocyanatgruppen aus (A) und der Summe der zerewitinoffaktiven Wasserstoffatome der Verbindungen (B), (C) und (D)) 85 bis 120 beträgt.

Bei den thermoplastischen Polyurethanen (kurz auch TPU genannt) handelt es sich um an sich bekannte, im Wesentlichen lineare, thermoplastisch verarbeitbare Polyurethane, die Phosphinoxide enthalten.

Es war überraschend und in keiner Weise vorhersehbar, dass mit dem One-shot-Verfahren unter Verwendung von organischen einbaufähigen Phosphinoxiden TPU hergestellt werden konnten, die hervorragende mechanische Eigenschaften sowie sehr gute Extrusionsqualität aufweisen.

Als organische Diisocyanate A) können im erfindungsgemäßen Verfahren aliphatische, cycloaliphatische, araliphatische, aromatische und heterocyclische Diisocyanate oder beliebige Gemische dieser Diisocyanate verwendet werden (vgl. HOUBEN-WEYL "Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im Einzelnen seien beispielhaft genannt: aliphatische Diisocyanate wie Ethylendiisocyanat, 1,4-Tetramethylendiisocyant, 1,6-Hexamethylendiisocyanat, 1, 12-Dodecandiisocyanat; cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische; außerdem aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyctohexyhnethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 mol-% (berechnet auf Gesamt-Diisocyanat) eines Polyisocyanates verwendet werden, es darf aber höchstens soviel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenyl-polymethylen-polyisocyanate.

Polyole B), die erfindungsgemäß eingesetzt werden, sind solche mit im Mittel mindestens 1,8 bis höchstens 3,0 zerewitinoff-aktiven Wasserstoffatomen und einem zahlenmittleren Molekulargewicht M̅ₙ von 450 bis 10000, bevorzugt von 450 bis 6000. Produktionsbedingt enthalten diese oft kleine Mengen an nicht-linearen Verbindungen. Häufig spricht man daher auch von "im Wesentlichen linearen Polyolen". Bevorzugt sind Polyester-, Polyether-, Polycarbonat-Diole oder Gemische aus diesen.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in solcher Menge, dass ein noch thermoplastisch verarbeitbares Produkt entsteht. Die im wesentlichen linearen Polyether-Diole besitzen vorzugsweise zahlenmittlere Molekulargewichte M̅ₙ von 450 bis 6000. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z:B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ro-Hydroxycarbonsäuren wie w-Hydroxycapronsäure oder Polymerisationsprodukte von Lactonen, z.B. gegebenenfalls substituierten ω-Caprolactonen. Als Polyester-Diole vorzugsweise verwendet werden Ethandiol-polyadipate, 1,4-Butandiolpolyadipate, Ethandiol-1,4-butandiolpolyadipate, 1,6-Hexandiol-neopentylglykolpolyadipate, 1,6-Hexandiol-1,4-butandiolpolyadipate und Polycaprolactone. Die Polyester-Diole besitzen zahlenmittlere Molekulargewichte M̅ₙ von 450 bis 10000 und können einzeln oder in Form von Mischungen untereinander zur Anwendung kommen.

Kettenverlängerungsmittel C) besitzen im Mittel 1,8 bis 3,0 zerewitinoffaktive Wasserstoffatome und haben ein Molekulargewicht von 60 bis 400. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden vorzugsweise aliphatische Diole mit 2 bis 14 Kohlenstoffatomen eingesetzt, wie z.B. Ethandiol, 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Das Flammschutzmittel D) auf Basis Phosphinoxid besitzt im Mittel mindestens 1,5 und höchstens 3,0, bevorzugt 1,8 bis 2,5, besonders bevorzugt 2 zerewitinoffaktive Wasserstoffatome. Das Phosphinoxid hat ein zahlenmittleres Molekulargewicht M̅ₙvon 60 bis 10000, bevorzugt 100 bis 5000, besonders bevorzugt 100 bis 1000.

Bevorzugt werden als Phosphinoxid Verbindungen der allgemeinen Formel (I) eingesetzt: 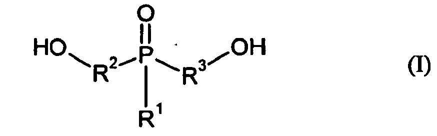 mit
- R¹ =: H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,
- R², R³=: verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen, wobei R² und R³ gleich oder verschieden sein können.

Das Phosphinoxid kommt vorzugsweise in einer Menge von 0,1 bis 20, bevorzugt 0,5 bis 10, besonders bevorzugt 1 bis 10 Gew.% bezogen auf die Gesamtmenge an TPU zum Einsatz.

Gegebenenfalls können auch weitere Flammschutzmittel F) zum Einsatz kommen, siehe z.B. H. Zweifel, Plastics Additives Handbook, 5th Ed., Hanser Verlag München, 2001, Kapitel 12; J. Green, J. of Fire Sciences, 1997, 15, S. 52-67 oder Kirk-Othmer Encyclopedia of Chemical Technology, 4th Ed., Vol. 10, John Wiley & Sons, New York, S. 930-998.

Geeignete Katalysatoren E) sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den TPU beträgt in der Regel etwa 0 bis 5 Gew.-%, bevorzugt 0 bis 2 Gew.-%, bezogen auf die Gesamtmenge an TPU.

Gegenüber Isocyanaten monofunktionelle Verbindungen können in Anteilen bis zu 2 Gew.-%, bezogen auf TPU, als sogenannte Kettenabbrecher eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die thermoplastischen Polyurethanelastomere können die üblichen und bekannten Hilfs- und Zusatzstoffe G) in Mengen bis zu maximal 20 Gew.-%, bezogen auf die Gesamtmenge an TPU, enthalten. Typische Hilfs- und Zusatzstoffe, sind Gleitmittel und Entformungsmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Farbstoffe, Pigmente, anorganische und/oder organische Füllstoffe, Weichmacher, wie Phosphate, Phthalate, Adipate, Sebacate und Alkylsulfonsäureester, fungistatisch und bakteriostatisch wirkende Substanzen sowie Füllstoffe und deren Mischungen und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 , dem Taschenbuch für Kunststoff-Additive von R.Gächter u. H.Müller (Hanser Verlag München 1990) oder DE-A 2901 774 zu entnehmen.

Zur erfindungsgemäßen Herstellung der TPU werden die Aufbaukomponenten A), B), C) und D) in Gegenwart der Flammschutzmittel F) und ggf. der Katalysatoren E) und der Hilfsmittel und/oder Zusatzstoffe G) in solchen Mengen zur Reaktion gebracht, dass das Äquivalenzverhältnis von NCO Gruppen der Diisocyanate A) zur Summe der zerewitinoffaktiven Wasserstoffatome der Komponenten B), C) und D) 0,85 bis 1,2 beträgt.

Die mittels des One-shot-Verfahrens erhaltenen TPU-Formmassen sind selbstverlöschend, tropfen nicht bzw. tropfen nicht brennend ab und weisen gute mechanische Eigenschaften und Verarbeitungseigenschaften auf.

Das erfindungsgemäße Verfahren wird vorzugsweise wie folgt ausgeführt:

Die Komponenten werden bei Temperaturen oberhalb ihres Schmelzpunktes, bevorzugt bei Temperaturen von 50 bis 220°C, kontinuierlich vermischt, vorzugsweise in einem Mischaggregat mit hoher Scherenergie. Beispielsweise können ein Mischkopf bzw. ein hochtouriger Rohrmischer, eine Düse, ein Rohr, ein Statikmischer oder ein Mehrwellenextruder (z.B. ein Zweiwellenkneter ZSK) eingesetzt werden. Statikmischer sind z.B. in Chem.-Ing. Techn. 52, Nr. 4, Seite 285 bis 291 sowie in "Mischen von Kunststoff und Kautschukprodukten", VDI-Verlag, Düsseldorf 1993, beschrieben. Beispielhaft seien SMX-Statikmischer der Firma Sulzer erwähnt.

Bei Einsatz von Extrudern werden die Temperaturen der Extrudergehäuse so gewählt, dass die Reaktionskomponenten zum vollständigen Umsatz gebracht werden und dass die mögliche Einarbeitung der oben erwähnten Hilfsstoffe oder der weiteren Komponenten bei größtmöglicher Produktschonung durchgeführt werden kann.

Das TPU kann gegebenenfalls nach seiner Herstellung weiter bearbeitet werden, z.B. durch Temperung und Herstellung von Platten oder Blöcken durch Zerkleinerung oder Granulierung in Schreddern oder Mühlen, durch Entgasung sowie durch Granulierung unter Aufschmelzen. Bevorzugt wird das TPU durch ein Aggregat zur kontinuierlichen Entgasung und Strangbildung geführt. Bei diesem Aggregat kann es sich z.B. um eine Mehrwellenschneckenmaschine (ZSK) handeln.

Die TPU werden bevorzugt zur Herstellung von Spritzgießartikeln und Extrusionsartikeln eingesetzt.

Die Erfindung soll anhand der nachfolgenden Beispiele näher erläutert werden.

### Beispiele

Im Folgenden verwendete Abkürzungen:

| | |
|---|---|
| Terathane^{®} 1000 | Polyether mit einem Molekulargewicht von Mₙ = 1000 g/mol; Produkt der Firma Du Pont de Nemours |
| MDI | Methylen-4,4'-(Phenylisocyanat) |
| IHPO | Isobutyl-bis(Hydroxypropyl)-Phosphinoxid, Flammschutzmittel |
| BDO | 1,4-Butandiol |
| Irganox^{®} 1010 | Tetrakis(methylen-(3,5-di-tert.-butyl-4-hydroxycinnamate))methan der Firma Ciba Specialty Chemicals Inc. |
| Licowax^{®}C | Trennmittel der Firma Clariant Würtz GmbH |
| BDP | Bisphenol A Diphenylphosphat, oligomeres Gemisch |
| Exolit^{®} OP 910 | Flammschutzmittel auf Basis Phosphonat der Firma Clariant GmbH (ohne zerewitinoffaktive Wasserstoffatome) |

### Beispiel 1: (Vergleich; One-shot-Verfahren und nicht-einbaufähiges Flammschutzmittel)

Ein Gemisch aus 1159 g Terathane® 1000, 139 g BDO, 200 g Exolit® OP 910, 7 g Irganox® 1010 und 10 g Licowax® C wurde unter Rühren mit einem Flügelrührer mit einer Drehzahl von 500 Umdrehungen pro Minute (UpM) auf 160°C aufgeheizt. Danach wurden 684 g MDI zugegeben. Anschließend wurde 110 Sekunden gerührt. Danach wurde das TPU ausgegossen. Zum Schluss wurde das Material 30 Minuten bei 80°C nachbehandelt. Das fertige TPU wurde geschnitten, granuliert und weiterverarbeitet.

### Beispiel 2: (Vergleich; Prepolymer-Verfahren und einbaufähiges Flammschutzmittel)

Terathane^{®} 1000 (650 g/min), in dem BDP (10 Gew.-% bezogen auf die Gesamtmenge TPU) und Irganox^{®} 1010 (0,4 Gew.-% bezogen auf die Gesamtmenge an TPU) gelöst waren, wurde mit IHPO (51 g/min) und Zinndioctoat (100 ppm bezogen auf die Menge an Terathane^{®} 1000) auf 180°C erhitzt und mittels einer Zahnradpumpe kontinuierlich in das erste Gehäuse einer ZSK 53 (Zweiwellenextruder der Firma Werner&Pfleiderer) dosiert.

In dasselbe Gehäuse wurde Desmodur^{®} 44 M (461 g/min; 60°C) gemeinsam mit Licowax^{®} C (5 g/min; 0,4 Gew.-% bezogen auf die Gesamtmenge an TPU) kontinierlich eindosiert.

In das Gehäuse 3 wurde anschließend Butandiol (98 g/min) kontinuierlich eindosiert.

Die Gehäuse 1 bis 3 des Extruders waren auf 80°C und die Gehäuse 4 bis 8 auf 210°C erhitzt, während die letzten 4 Gehäuse gekühlt wurden. Die Drehzahl der Schnecke betrug 290 U/min.

Am Ende der Schnecke wurde die heiße Schmelze als Strang abgezogen, im Wasserbad gekühlt und granuliert.

### Beispiel 3: (erfindungsgemäß; One-shot-Verfahren und einbaufähiges Phosphinoxid)

Terathane^{®} 1000 (650 g/min), in dem BDP (10 Gew.-% bezogen auf die Gesamtmenge TPU), Irganox^{®} 1010 (0,4 Gew.-% bezogen auf die Gesamtmenge an TPU) und Zinndioctoat (100 ppm bezogen auf die Menge Terathane^{®} 1000) gelöst waren, wurde auf 180°C erhitzt und mittels einer Zahnradpumpe kontinuierlich in das erste Gehäuse einer ZSK 53 (Zweiwellenextruder der Firma Werner&Pfleiderer) dosiert.

In dasselbe Gehäuse wurden Butandiol (98 g/min) und IHPO (51 g/min; 60°C) gemeinsam mit Licowax^{®} C (5 g/min; 0,4 Gew.-% bezogen auf die Gesamtmenge an TPU) kontinuierlich eindosiert.

In Gehäuse 3 wurde anschließend Desmodur^{®} 44 M (461 g/min; 60°C) kontinuierlich eindosiert.

Die Gehäuse 1 bis 3 waren auf 80°C und die Gehäuse 4 bis 8 auf 210°C erhitzt, während die letzten 4 Gehäuse gekühlt wurden. Die Drehzahl der Schnecke betrug 290 U/min.

Am Ende der Schnecke wurde die heiße Schmelze als Strang abgezogen, im Wasserbad gekühlt und granuliert.

### Beispiel 4: (erfindungsgemäß; One-shot-Verfahren und einbaufähiges Phosphinoxid)

Terathane^{®} 1000 (550 g/min), in dem Irganox^{®} 1010 (0,4 Gew.-% bezogen auf die Gesamtmenge an TPU) und Zinndioctoat (100 ppm bezogen auf die Menge Terathane^{®} 1000) gelöst waren, wurde auf 180°C erhitzt und mittels einer Zahnradpumpe kontinuierlich in das erste Gehäuse einer ZSK 53 (Zweiwellenextruder der Firma Werner&Pfleiderer) dosiert.

In dasselbe Gehäuse wurden Butandiol (107 g/min) und IHPO (78 g/min; 60°C) gemeinsam mit Licowax^{®} C (5 g/min; 0,4 Gew.-% bezogen auf die Gesamtmenge an TPU) kontinuierlich eindosiert.

In das Gehäuse 3 wurde anschließend Desmodur^{®} 44 M (517 g/min; 60°C) kontinuierlich eindosiert.

Die Gehäuse 1 bis 3 des Extruders waren auf 80°C und die Gehäuse 4 bis 8 auf 210 °C erhitzt, während die letzten 4 Gehäuse gekühlt wurden. Die Drehzahl der Schnecke betrug 290 U/min.

Am Ende der Schnecke wurde die heiße Schmelze als Strang abgezogen, im Wasserbad gekühlt und granuliert.

### Messung der MVR-Werte (MVR =Melt volume rate)

Der MVR-Wert der Granulate wurde gemäß ISO 1133 mit 10 kg Gewicht gemessen.

### Herstellung der Spritzgießkörper

Das jeweilige TPU-Granulat aus den Beispielen 1 bis 4 wurde in einer Spritzgießmaschine D 60 (32er Schnecke der Firma Mannesmann) aufgeschmolzen (Massetemperatur ca. 230°C) und zu Platten geformt (125 mm x 50 mm x 2 mm).

### Schlauchextrusion

Das TPU-Granulat wurde in einem Einwellen-Extruder 30/25D (Plasticorder PL 2000-6 der Firma Brabender) aufgeschmolzen (Dosierung 3 kg/h; Temperatur 230 bis 195°C) und durch einen Schlauchkopf zu einem Schlauch extrudiert.

### Mechanische Prüfung bei Raumtemperatur

Die Reißfestigkeit und Reißdehnung wurden an den Spritzgießkörpern nach DIN 53 405 gemessen.

### Ermittlung der Flammschutzeigenschaften

Die Flammschutzeigenschaften wurden gemäß UL94 V bei einer Dicke des Prüfkörpers von 3 mm ermittelt (beschrieben in Underwriters Laboratories Inc. Standard of Safety, "Test for Flammability of Plastic Materials for Parts in Devices and Appliances", S 14 ff, Northbrook 1998 und J. Triotzsch, "International Plastics Flammability Handbook", S 346 ff, Hanser Verlag, München 1990).

In diesem Test bedeutet eine V 0-Bewertung ein nicht brennendes Abtropfen. Ein Produkt mit dieser Bewertung wird deshalb als flammwidrig bezeichnet. Eine V 2-Bewertung bedeutet ein brennendes Abtropfen, d.h. fehlende Flammwidrigkeit.

**Tabelle 1: Ergebnisse:**

| **Beispiel** | **Art des Beispiels** | **MVR 210°C** | **Reißfestigkeit (MPa)** | **Reißdehnung (%)** | **Extrusions-qualität** | **Schwin dung (%)** | **UL-94** |
|---|---|---|---|---|---|---|---|
| **1** | Vergleich, One-shot-Verfahren, nicht-einbaufähiges Flammschutzmittel | 40 | 47 | 410 | Gut, homogen, unakzeptabler Belag | 1,5 | V-0 |
| **2** | Vergleich, Prepolymer-Verfahren, einbaufähiges Phosphinoxid | 40 | 32 | 364 | Inhomogen, viele Knoten | 1,1 | V-0 |
| **3** | Erfindungsgemäß, One-shot-Verfahren | 45 | 43 | 402 | Gut, homogen | 0,9 | V-0 |
| **4** | Erfindungsgemäß, One-shot-Verfahren | 40 | 36 | 345 | Gut, homogen | 0,9 | V-0 |

Im Vergleichsbeispiel 1 wurde im One-shot-Verfahren ein nicht-einbaufähiges Flammschutzmittel (Exolit^{®} OP 910) eingesetzt. Die Eigenschaften des TPU, wie Mechanik, Schwindung und Brandeingeschaft sind in Ordnung. Die Extrusionsqualität ist zwar gut, jedoch bildet sich ein schmieriger Oberflächenbelag. Der Schlauch ist daher nicht akzeptabel und unbrauchbar.

Im Vergleichsbeispiel 2 wurde im Prepolymer-Verfahren ein TPU hergestellt, das eine Reißfestigkeit von 32 MPa aufweist. Die Flammschutzeigenschaften sind gut, jedoch ist die Extrusionsqualität nicht akzeptabel.

Im erfindungsgemäßen Beispiel 3 wurde die Herstellung des TPU im One-shot-Verfahren mit einbaufähigem Phosphinoxid durchgeführt. Das TPU hat gute Flammschutzeigenschaften (UL-94 V-0), weist eine sehr gute Mechanik mit 43 MPa Reißfestigkeit und zudem eine sehr gute Extrusionsqualität auf.

Im erfindungsgemäßen Beispiel 4 wurde ebenfalls das One-shot-Verfahren durchgeführt, allerdings wurde kein Reofos^{®} BAPP verwendet (die Mechanikwerte können daher nicht mit den anderen Beispielen verglichen werden). Auch in diesem Fall hat das TPU gute Flammschutzeigenschaften (UL-94 V-0) und eine gute Extrusionsqualität.

Die Daten belegen, dass ein selbstverlöschendes TPU mit guten mechanischen Eigenschaften, guter Extrusionsqualität, geringer Schwindung und ohne Ausblühen nur erhalten werden kann, wenn ein einbaufähiges Phosphinoxid eingesetzt wird und die Herstellung des TPU im One-shot-Verfahren erfolgt.

## Patentansprüche

1. Verfahren zur Herstellung von thermoplastisch verarbeitbaren Polyurethanelastomeren (TPU) mit selbstverlöschenden Eigenschaften, gegebenenfalls in Gegenwart von Katalysatoren (E), wobei im One-shot-Verfahren
A) wenigstens ein organisches Diisocyanat mit
B) wenigstens einem Polyol mit im Mittel mindestens 1,8 und höchstens 3,0 zerewitinoffaktiven Wasserstoffatomen und einem zahlenmittleren Molekulargewicht M̅ₙ von 450 bis 10000,
C) wenigstens einem niedermolekularen Polyol oder Polyamin mit im Mittel mindestens 1,8 und höchstens 3,0 zerewitinoffaktiven Wasserstoffatomen und einem zahlenmittleren Molekulargewicht M̅ₙ von 60 bis 400 als Kettenverlängerer und
D) mindestens einer organischen phosphorhaltigen Verbindung auf Basis Phosphinoxid mit im Mittel mindestens 1,5 und höchstens 3,0 zerewitinoffaktiven Wasserstoffatomen und einem zahlenmittleren Molekulargewicht M̅ₙ von 60 bis 10000 in einer Menge von 0,1 bis 20 Gew.-%, bezogen auf die Gesamtmenge an TPU, mit folgender Strukturformel (I): 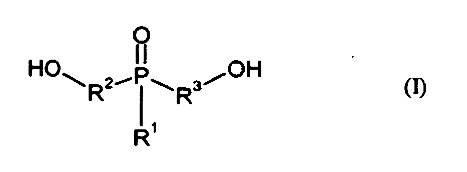 mit
R¹ = H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,
R², R³= verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen, wobei R² und R³ gleich oder verschieden sein können,
umgesetzt wird, gegebenenfalls unter Verwendung von
F) weiteren Flammschutzmitteln, welche keine zerewitinoffaktiven Wasserstoffatome enthalten, in einer Menge von 0 bis 70 Gew.-%, bezogen auf die Gesamtmenge an TPU, und
G) 0 bis 20 Gew.-%, bezogen auf die Gesamtmenge an TPU, weiteren Hilfs- und Zusatzstoffen,
wobei die Kennzahl (gebildet aus dem mit 100 multiplizierten Äquivalenzverhältnis der Isocyanatgruppen aus (A) und der Summe der zerewitinoffaktiven Wasserstoffatome der Verbindungen (B), (C) und (D)) 85 bis 120 beträgt.

2. Verfahren zur Herstellung der thermoplastisch verarbeitbaren Polyurethanelastomeren (TPU) gemäß Anspruch 1, **dadurch gekennzeichnet, dass** das Diisocyanat A) ein aromatisches Diisocyanat ist.

3. Verfahren zur Herstellung der thermoplastisch verarbeitbaren Polyurethanelastomeren (TPU) gemäß Anspruch 1, **dadurch gekennzeichnet, dass** das Polyol B) ein Polyether ist.

4. Verfahren zur Herstellung der thermoplastisch verarbeitbaren Polyurethanelastomeren (TPU) gemäß Anspruch 1, **dadurch gekennzeichnet, dass** das Polyol C) Ethylenglykol, Butandiol, Hexandiol, 1,4-Di-(betahydroxyethyl)-hydrochinon und/oder 1,4-di-(betahydroxyethyl)bisphenol A ist.

5. Verfahren zur Herstellung der thermoplastisch verarbeitbaren Polyurethanelastomeren (TPU) gemäß Anspruch 1, **dadurch gekennzeichnet, dass** die Komponente D) eine Funktionalität von im Mittel 2 hat.

## Claims

1. Process for the preparation of thermoplastically processable polyurethane elastomers (TPU) having self-extinguishing properties, optionally in the presence of catalysts (E), wherein, in the one-shot process,
A) at least one organic diisocyanate is reacted with
B) at least one polyol having on average at least 1.8 and at most 3.0 zerewitinoff-active hydrogen atoms and a number-average molecular weight M̅ₙ of from 450 to 10,000,
C) at least one low molecular weight polyol or polyamine having on average at least 1.8 and at most 3.0 zerewitinoff-active hydrogen atoms and a number-average molecular weight M̅ₙ of from 60 to 400 as a chain lengthener and
D) at least one organic phosphorus-containing compound based on phosphine oxide having on average at least 1,5 and at most 3.0 zerewitinoff-active hydrogen atoms and a number-average molecular weight M̅ₙ of from 60 to 10,000 in an amount of from 0.1 to 20 wt.%, based on the total amount of TPU, with the following structural formula (I): 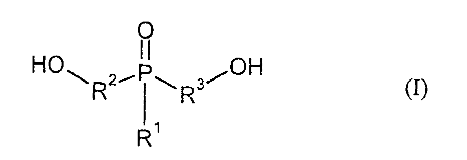 where
R¹ = H, branched or unbranched alkyl radicals having 1 to 24 C atoms, substituted or unsubstituted aryl radicals having 6 to 20 C atoms, substituted or unsubstituted aralkyl radicals having 6 to 30 C atoms or substituted or unsubstituted alkaryl radicals having 6 to 30 C atoms and
R², R³ = branched or unbranched alkylene radicals having 1 to 24 C atoms, substituted or unsubstituted arylene radicals having 6 to 20 C atoms, substituted or unsubstituted aralkylene radicals having 6 to 30 C atoms or substituted or unsubstituted alkarylene radicals having 6 to 30 C atoms, wherein R² and R³ can be identical or different,
optionally using
F) further flameproofing agents which contain no zerewitinoff-active hydrogen atoms, in an amount of from 0 to 70 wt.%, based on the total amount of TPU, and
G) 0 to 20 wt.%, based on the total amount of TPU, of further auxiliary substances and additives,
wherein the characteristic number (formed from the ratio of equivalents, multiplied by 100, of the isocyanate groups from (A) and the sum of the zerewitinoff-active hydrogen atoms of the compounds (B), (C) and (D)) is 85 to 120.

2. Process for the preparation of the thermoplastically processable polyurethane elastomers (TPU) according to claim 1, **characterized in that** the diisocyanate A) is an aromatic diisocyanate.

3. Process for the preparation of the thermoplastically processable polyurethane elastomers (TPU) according to claim 1, **characterized in that** the polyol B) is a polyether.

4. Process for the preparation of the thermoplastically processable polyurethane elastomers (TPU) according to claim 1, **characterized in that** the polyol C) is ethylene glycol, butanediol, hexanediol, 1,4-di-(beta-hydroxyethyl)-hydroquinone and/or 1,4-di-(betahydroxyethyl)bisphenol A.

5. Process for the preparation of the thermoplastically processable polyurethane elastomers (TPU) according to claim 1, **characterized in that** component D) has a functionality of on average 2.

## Revendications

1. Procédé pour la préparation d'élastomères de polyuréthane (TPU) thermoplastiquement transformables avec des caractéristiques autoextinctibles, éventuellement en présence de catalyseurs (E), dans lequel on fait réagir dans un procédé One-shot
A) au moins un diisocyanate organique avec
B) au moins un polyol avec en moyenne au moins 1,8 et au plus 3,0 atomes d'hydrogène Zerewitinoff actifs et un poids moléculaire moyen en nombre M̅ₙ de 450 à 10 000,
C) au moins un polyol ou une polyamine de faible poids moléculaire avec en moyenne au moins 1,8 et au plus 3,0 atomes d'hydrogène Zerewitinoff actifs et un poids moléculaire moyen en nombre M̅ₙ de 60 à 400 comme agent d'allongement de chaîne et
D) au moins un composé organique contenant du phosphore à base d'oxyde de phosphine avec en moyenne au moins 1,5 et au plus 3,0 atomes d'hydrogène Zerewitinoff actifs et un poids moléculaire moyen en nombre M̅ₙ de 60 à 10 000 dans une quantité de 0,1 à 20 % en poids, rapportés à la quantité totale de TPU, avec la formule de structure suivante (I) : 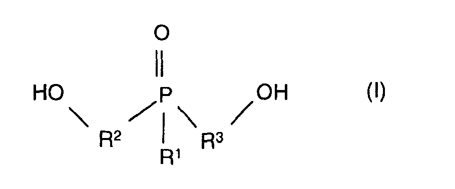 avec
R¹ = H, des restes alkyles ramifiés ou non ramifiés avec de 1 à 24 atomes C, des restes aryles subsitués ou non subsitués avec de 6 à 20 atomes C, des restes aralkyles substitués ou non substitués avec de 6 à 30 atomes C, des restes alcaryles substitués ou non substitués avec de 6 à 30 atomes C,
R², R³ = des restes alkylènes ramifiés ou non ramifiés avec de 1 à 24 atomes C, des restes arylènes substitués ou non substitués avec de 6 à 20 atomes C, des restes aralkylènes substitués ou non substitués avec de 6 à 30 atomes C, des restes alcarylènes substitués ou non substitués avec de 6 à 30 atomes C, R² et R³ pouvant être identiques ou différents, éventuellement en utilisant
F) d'autres agents ignifuges, lesquels ne contiennent pas d'atomes d'hydrogène Zerewitinoff actifs, dans une quantité de 0 à 70 % en poids, rapportés à la quantité totale de TPU, et
G) de 0 à 20 % en poids, rapportés à la quantité totale de TPU, d'autres auxiliaires et additifs,
la constante (formée à partir du rapport d'équivalent des groupes isocyanates de (A) multiplié par 100 et de la somme des atomes d'hydrogène Zerewitinoff actifs des composés (B), (C) et (D)) étant de 85 à 120.

2. Procédé pour la préparation des élastomères de polyuréthane thermoplastiquement transformables (TPU) selon la revendication 1, **caractérisé en ce que** le diisocyanate A) est un diisocyanate aromatique.

3. Procédé pour la préparation des élastomères de polyuréthane thermoplastiquement transformables (TPU) selon la revendication 1, **caractérisé en ce que** le polyol B) est un polyéther.

4. Procédé pour la préparation des élastomères de polyuréthane thermoplastiquement transformables (TPU) selon la revendication 1, **caractérisé en ce que** le polyol C) est l'éthylèneglycol, le butanediol, l'hexanediol, la 1,4-di-(bétahydroxyéthyl)-hydroquinone et/ou le 1,4-di-(bétahydroxyéthyl)bisphénol A.

5. Procédé pour la préparation des élastomères de polyuréthane thermoplastiquement transformables (TPU) selon la revendication 1, **caractérisé en ce que** le constituant D) possède une fonctionnalité en moyenne de 2.
